# EUROPEAN PATENT APPLICATION

(11) **EP 1 595 677 A1**
(43) Date of publication of application: **16.11.2005**
(21) Application number: 04011031.4
(22) Date of filing: 10.05.2004
(51) Int. Cl.: B29C 45/16

(54) **Apparatus and method for co-injection moulding of plastic materials**

(71) Applicant: Amuleto - Trading E Marketing LDA, 9000-058 Funchal, Madeira (PT)
(72) Inventor: Canevese, Dino, 31047 Ponte di Piave (Treviso) (IT); Lucchini, Giuseppe, 10128 Torino (IT)
(74) Representative: Buzzi, Franco

(57) **Abstract**

An apparatus and method for moulding plastic material by co-injection, in which two shutters (K, H) of an injector nozzle (1) are operated in independent and combined fashion, by means of respective linear actuators (15, 16), according to a sequential cycle which allows perfectly to confine a less valuable plastic material (B) within a more valuable plastic material (A).

## Description

The present invention relates to an apparatus and method for moulding plastic materials by co-injection. This designation indicates the moulding of objects having layered thickness: two outer layers of a more valuable plastic material, and a core of a different, normally cheaper, plastic material.

The object of the present invention is to provide an apparatus and a method for co-injection, whereby it is possible to obtain the perfect confinement of the less valuable plastic material in the core of the moulded object, in order to maintain unaltered the aesthetic characteristics of the pieces with respect to similar pieces obtained by single-component moulding.

According to the invention, said object is achieved by means of a moulding apparatus whose primary characteristic is defined in claim 1, and by means of a moulding process whose primary characteristic is defined in claim 5.

The invention shall now be described in detail with reference to the accompanying drawings, provided purely by way of non limiting example, in which:
- Figure 1 is a schematic, longitudinal section view of a part of an apparatus for moulding plastic materials by means of co-injection, according to the invention,

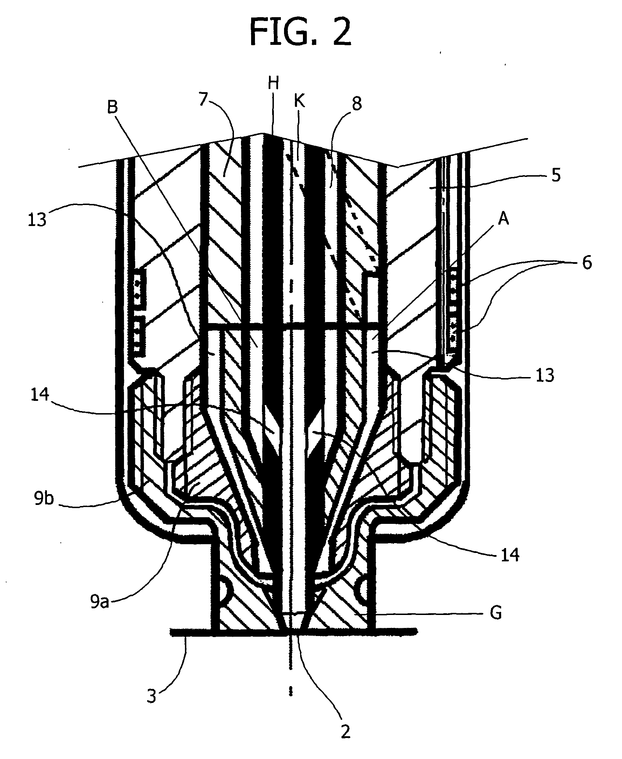

- Figure 2 shows a detail of Figure 1 in enlarged scale, and
- Figure 3 shows, in reduced scale, the detail of Figure 2 during the subsequent steps of the co-injection moulding method.

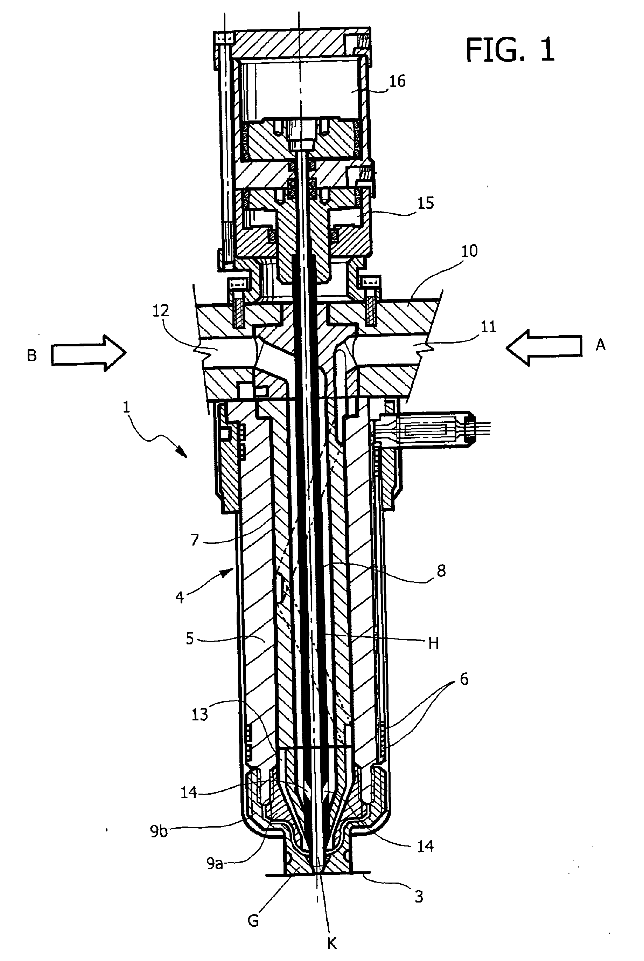

Referring initially to Figure 1, the number 1 globally designates an injector nozzle which constitutes the fundamental element of the apparatus and of the method for co-injection moulding according to the invention. The injector nozzle 1, which shall now be described in detail, is operatively associated to an injection conduit, summarily shown with the reference number 2, of a mould 3. Normally, the injection equipment may include a plurality of identical injectors 1.

The injector nozzle 1 comprises a body, globally designated by the reference number 4, which includes an external tubular part 5 with associated heating electrical resistors 6 and an internal tubular part 7 which defines a central axis passage 8. At the side oriented towards the injection conduit 2, the body 4 of the injector nozzle 1 is provided with a nozzle terminal generically designated as G and facing, at its free end, the injection conduit 2. Typically, the nozzle terminal G is formed by a hollow internal element 9a of a material with high thermal conducibility, and by a hollow external element 9b of a material with lower thermal conducibility.

The nozzle terminal G is coaxially aligned with the central axial passage 8, through which extend a tubular shutter H and, within it, a pin shutter K.

From the side of the body 4 of the injector nozzle 1 that is opposite to the injection conduit 2 is positioned a hot chamber body 10 through which are formed a first channel 11 for the flow of a first fluid plastic material A, and a second flow channel 12 of a second fluid plastic material B. The plastic materials A and B are different from each other, and typically the plastic material A is more valuable whilst the plastic material B is less valuable.

The first flow channel 11 is separated from the central passage 8 and is formed, for example, according to a substantially helical configuration between the internal element 7 and the external element 5 of the body 4. Said first flow channel 11 joins the central passage 8 at the nozzle terminal G, through an annular chamber 13 formed between the internal element 7 of the body 4 and in part the external element 5 and in part the nozzle terminal G.

The second flow passage 12 extends axially along the central passage 8, i.e. it consists of the axial annular inter-space between the internal element 7 of the body 4 and the tubular shutter H. Said second flow channel 12 ends upstream of the nozzle terminal G and, as shall be seen, it is connected through it with the injection conduit 2 by means of one or more substantially radial or oblique ports 14 formed in proximity to the end of said tubular shutter H that is oriented towards the nozzle terminal G.

The tubular shutter H is axially movable along the central passage 8 between a retracted position, in which as shall be seen the communication between the flow channel 11 and the nozzle terminal G is open, and an advanced position in which said communication is closed. The movements of the tubular shutter H between the retracted and advanced positions are commanded by means of a first fluid linear actuator 15.

The pin shutter K can slide within the tubular shutter H and is movable, by means of a second fluid linear actuator 16 coaxial to the first linear actuator 15, between an advanced position in which it shuts off communication between the flow channel 11 and the injection conduit 2, and a retracted position in which said communication is open.

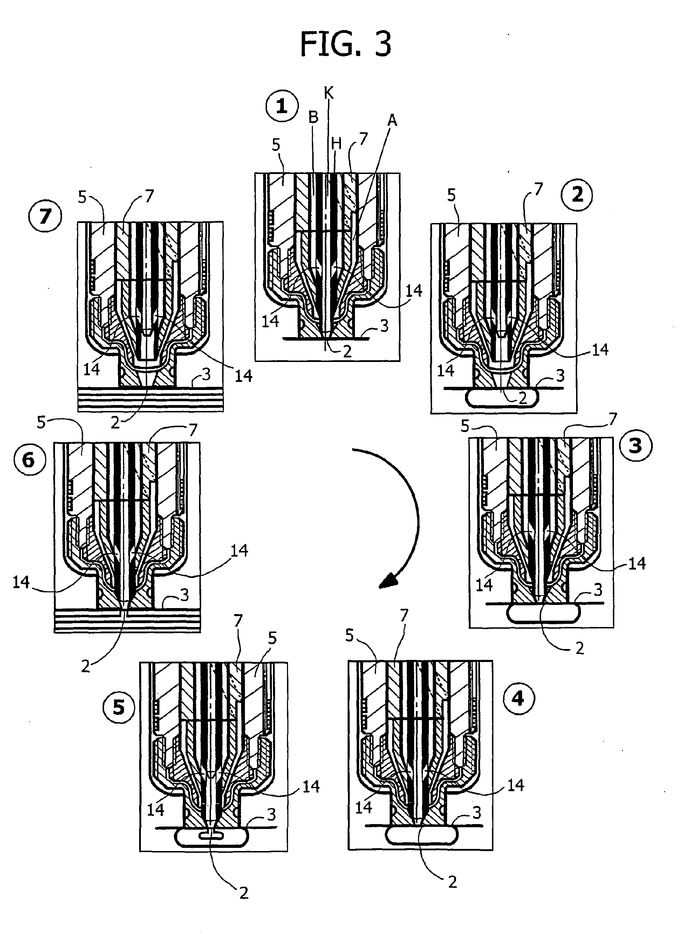

The linear actuators 15 and 16 are operatively connected to an electro-hydraulic control group, not shown in the drawings, whereby they are operated according to a sequential cycle of co-injection of the two plastic materials A, B into the cavity of the mould 3, in the manners described below with reference to Figure 3.

The co-injection cycle, as schematically shown in Figure 3, may comprise eight successive steps, number 1 through 7, which follow each other in the direction of the arrow visible in Figure 3, and whereof the first one coincides with the eighth one.

In the initial step, designated "1", the pin shutter is in the advanced position and the tubular shutter H is in the retracted position. In this way, both the communication between the injection conduit 2 and the first flow channel 11, and the communication between said injection conduit 2 and the second flow channel 12 are shut off. The passage of both materials A and B from the injector nozzle 1 to the cavity of the mould 3 is thus prevented.

In the second step, designated by the number "2", the pin shutter K is moved to a first retracted position, in order to open communication between the flow channel 11 and the injection conduit 2 to inject the fluid plastic material A into the mould 3, whilst the ports 14 remain closed. The plastic material A will form the skin of the artefact.

In the third step, designated "3", the pin shutter K is moved to the advanced position, in order to close communication between the flow channel 11 and the injection conduit 2. In this way, the flow of the material A towards the cavity of the mould 3 is stopped.

In the subsequent step, designated "4", the tubular shutter H is placed in the advanced position, in order to shut off communication between the flow channel 11 and the nozzle terminal G. A preferential passage is thereby created for the material B which will form the core of the artefact.

Then, in the subsequent step designated "5", the pin shutter K is brought to a second retracted position in which it opens the ports 14, placing the second flow channel 12 in communication with the nozzle terminal G as well as with the injection conduit 2 to inject the second fluid plastic material B into the cavity of the mould.

Then, in the following step, designated "6", the pin shutter K is moved back to the advanced position, in order to close communication between the second flow channel 12 and the injection conduit 2. In this way, the injection conduit 2 and the point of injection of the second material B are also cleaned.

In the subsequent step, designated "7", the pin shutter K is returned to the first retracted position, in which the ports 14 are closed, and the tubular shutter H is placed in the retracted position, in order to complete the injection of the first material A. At the end, the material B is totally confined in the core of the artefact, inside the material A.

In the final step, designated "1", the initial condition is restored, so the pin shutter K is placed in the advanced position and the tubular shutter H is in the retracted position, thereby shutting off communication with the injection conduit to both flow channels 11 and 12.

It shall be readily apparent from the above description that the independent and combined operation of the two shutters K and J allows to obtain a perfect confinement of the less valuable material B in the core of the moulded object, within the more valuable material A. This feature enables to safeguard the aesthetic characteristics of the moulded pieces, whose final appearance will be comparable to that of pieces obtained with single-component moulding, hence at considerably higher cost.
Naturally, the construction details and the embodiments of the apparatus according to the invention may vary widely from what is described and illustrated herein, without thereby departing from the scope of the present invention as defined in the appended claims.
Thus, for example, the injection steps of the first and the second plastic materials could be reversed with respect to the above description: in such a case the co-injection sequential cycle shall provide initially injection of the second material B and subsequently injection of the first material A. It also to be pointed out that the steps disclosed in the above as "3", "4" and "6" could be suppressed. Accordingly, shutting off the flow of the first plastic material A (or of the second plastic material B, respectively) and opening the flow of the second plastic material B (or of the first plastic material A, respectively)into the mould 3 would be carried out in a more abrupt fashion, i.e. without an intermediate step of interruption of the flow of both first and second plastic materials A and B.
Moreover, even the step "7" could be made optional, and in such a case step "1" will immediately follow step "6".
Lastly, the actuators 15 and 16 could consist, instead of fluid jacks, of electrical or different actuators.
The method according to the invention can be advantageously employed in a variety of applications, among which:
1. injection at the core of a recycled or quite cheap material, provided that such material be injectable;
2. injection at the core of a foamed and/or gaseous meterial (i.e. Mu-cell)
3. injection at the skin of an aesthetically good materal and at the core of a structural material (i.e. having high resistance performance but poor aesthetical features)
4. insertion at the core of a sound-proof material
5. differently coloured materials even with an outer transparent layer to achieve decorative effects
6. mixed articles
The only aspect to be taken into consideration is the mutual compatibility between the two different materials. Adhesion therebetween is not fundamental: the article will retain its desired performances even if adhesion between the two materials is low.

## Claims

1. An apparatus for co-injection moulding plastic materials comprising at least one injector nozzle (1) associated to an injection conduit (2) of a mould (3) and including a body (4) having a central axial passage (8) communicating with an end with a nozzle terminals (G) and along which a pin acting in the manner of a shutter (K) of said injection conduit (2) can be moved axially between an advanced position in which it shuts off communication between said injection conduit (2) and a flow channel (11) of a fluid plastic material (A), and a retracted position of said communication, and actuator means (16) to command the axial displacement of said pin shutter (K) between said advanced and retracted positions,
**characterised in that** said flow channel (11) is separated from said central passage (8) and ends into it at said nozzle terminal (G), and **in that** it further comprises:
- a tubular shutter (H) axially movable along said central passage (8) and within which said pin shutter (K) is slidable,
- a second flow channel (12) for a second fluid plastic material (B), different from said first fluid plastic material (A), said second flow channel (12) extending along said central passage (8) between said body (4) of the injector nozzle (1) and said tubular shutter (H) and being connected to said nozzle terminal (G) by means of at least a port (14) formed through said tubular shutter (H) and whose opening and closing are controlled by said pin shutter (K),
- second actuator means (15) independent from said actuator means (16) of the pin shutter (K) in order to move axially said tubular shutter (H) between a retracted position, in which communication between said flow channel (2) and said nozzle terminal (G) is open, and an advanced position in which said communication is closed, and
- control means of said actuator means (16) and said second actuator means (15) according to a sequential cycle which comprises, starting from a condition in which said pin shutter (K) is in the advanced position and said tubular shutter (H) is in retracted position, so that communication between said injection conduit (2) and both said flow channel (11) and said second flow channel (12) is closed, firstly injection of said first plastic material (A) and subsequently injection of said second plastic material (B), or vice versa.

2. An apparatus as claimed in claim 1, **characterised in that** said sequential cycle carried out by said control means comprises the following steps:
- positioning said pin shutter (K) in a first retracted position, opening communication between said flow channel (11) and said injection conduit (2) to inject said first plastic material (A) into the mould (3) whilst said at least one port (14) is closed,
- positioning said pin shutter (K) in the advanced position, closing communication between said flow channel (11) and said injection conduit (2),
- positioning said tubular shutter (H) in the advanced position, closing communication between said flow channel (11) and said nozzle terminal (G),
- positioning said pin shutter (K) in a second retracted position in which said at least one port (14) is open placing said second flow channel (12) in communication with said nozzle terminal (G) and said injection conduit (2) to inject said second fluid plastic material (B) into the mould (3),
- repositioning said pin shutter (K) in the advanced position, closing communication between said second flow channel (12) and said injection conduit (2).

3. An apparatus as claimed in claim 2, **characterised in that** said control means further execute the following subsequent step:
- positioning said pin shutter (K) in said first retracted position and then said tubular shutter (H) in said retracted position to inject said first plastic matter (A) into the mould.

4. An apparatus as claimed in claim 2 or 3, **characterised in that** said actuator means are constituted by a pair of fluid jacks (15, 16).

5. An apparatus as claimed in any of the preceding claims, **characterised in that** said flow channel (11) has a substantially helical configuration.

6. A method for co-injection moulding of plastic materials, **characterised in that** it makes use of an injection moulding apparatus comprising at least one injector nozzle associated to an injection conduit of a mould and including a body having a central axial passage communicating with an end with a nozzle terminals and along which a pin acting in the manner of a shutter of said injection conduit can be moved axially between an advanced position in which it shuts off communication between said injection conduit and a flow channel of a first fluid plastic material and a retracted position of said communication, and actuator means to command the axial displacement of said pin shutter between said advanced and retracted positions, in which said flow channel is separated from said central passage and terminates into it at said nozzle terminal, and in which said moulding apparatus further comprises a tubular shutter axially movable along said central passage and within which said pin shutter is able to slide, a second flow channel for a second fluid plastic material different from said fluid plastic material, said second flow channel extending along said central passage between said body of the injector nozzle and said tubular shutter and being connected to said nozzle terminal by means of at least a port formed through said tubular shutter and whose opening and closing are controlled by said pin shutter, second actuator means independent from said actuator means of the pin shutter to move said tubular shutter axially between a retracted position, in which communication between said flow channel and said terminal nozzle is open, and an advanced position in which said communication is closed, said method comprising the control of said actuator means and of said second actuator means according to a sequential cycle whereby, starting from a condition in which said pin shutter is in the advanced position and said tubular shutter is in the retracted position, so that communication between said injection conduit and both said flow channel and said second flow channel is closed, firstly injection of said first plastic material (A) and subsequently injection of said second plastic material (B), or vice versa.

7. A method as claimed in claim 6, **characterised in that** said sequential cycle comprises the following steps.
- positioning said pin shutter in a first retracted position, opening communication between said flow channel and said injection conduit to inject said first plastic material into the mould whilst said at least one port is closed,
- positioning said pin shutter in the advanced position, closing communication between said flow channel and said injection conduit,
- positioning said tubular shutter in the advanced position, closing communication between said flow channel and said nozzle terminal,
- positioning said pin shutter in a second retracted position in which said at least one port is open placing said second flow channel in communication with said nozzle terminal and said injection conduit to inject said second fluid plastic material into the mould,
- repositioning said pin shutter in the advanced position, closing communication between said second flow channel and said injection conduit.

8. A method as claimed in claim 7, **characterised in that** it further comprises the following subsequent step:
- positioning said pin shutter in said first retracted position and then said tubular shutter in said retracted position to inject said fluid plastic matter into the mould.
